# EUROPEAN PATENT SPECIFICATION

(11) **EP 2 415 112 B1**
(45) Date of publication and mention of the grant of the patent: **26.11.2014**
(21) Application number: 09737342.7
(22) Date of filing: 02.10.2009
(51) Int. Cl.: H01M 8/04, H01M 16/00, H01M 12/08, H01M 12/00

(54) **MOBILE ELECTRONIC DEVICE WITH AIR INLET**
MOBILE ELEKTRONISCHE EINRICHTUNG MIT LUFTEINLASS
DISPOSITIF ÉLECTRONIQUE MOBILE À ENTRÉE D'AIR

(30) Priority: 03.04.2009 US 417984
(43) Date of publication of application: 08.02.2012
(73) Proprietor: Sony Ericsson Mobile Communications AB, 221 88 Lund (SE)
(72) Inventor: WOLF, Mats, S-247 35 Södra Sandby (SE)
(74) Representative: Banzer, Hans-Jörg
(86) International application number: PCT/EP2009/007089
(87) International publication number: WO 2010/112054

(56) References cited:
- WO-A-99/60642
- US-A1- 2002 150 805
- US-A1- 2008 145 737

## Description

### FIELD OF THE INVENTION

The present invention relates to mobile electronic devices having air inlets to supply air to a power supply.

### BACKGROUND

In the design of mobile electronic devices like mobile phones or laptop computers, selecting an appriopriate power supply is a major concern. Ideally, the power supply should be light-weight while having a capacity sufficient to supply the mobile electronic device with power over an extended period of time, at least some hours.

Conventionally, rechargeable batteries are used as power supplies. However, the widespread use of batteries has created environmental concerns such as toxic metal pollution, consuming of resources and use of hazardous chemicals by battery manufacturers and the electronic waste constituted by used batteries.

For future mobile electronic devices, fuel cells and related devices are promising candidates for power supplies. Fuel cells generally generate electricity from an electrochemical reaction in which oxygen, usually taken from the ambient air, and a fuel, for example hydrogen, react with each other to form for example water in the case of hydrogen as a fuel, the energy generated by such a reaction then being converted into electricity. Another fuel cell-like device is a metal-air cell, e. g. a zinc-air cell, in which air reacts with metal electrodes, e. g. zinc electrodes.

Such kind of power supplies are sensitive to contamination in the ambient air, for example carbon monoxide, sulfur dioxide, hydrogen sulphide and a large number of organics, which may for example be generated by combustion engines in cars or in manufacturing plants. Such contamination may reduce the performance and lifetime of fuel cells or similar power supplies which use a reaction involving ambient air to generate electrical power.

WO 99\60642 A discloses a mobile electronic device according to the preamble of claim 1.

### SUMMARY OF THE INVENTION

The present invention provides a mobile electronic device as defined in claim 1 and a method for operating a mobile electronic device as defined in claim 10. The dependent claims define preferred embodiments of the invention.

According to an embodiment, a mobile electronic device is provided, comprising:
a power supply configured to generate power using oxygen,
an air inlet to supply air to said power supply,
a sensor configured to detect at least one predetermined gas in the air, and
a shutter mechanism configured to close said air inlet if said sensor detects said predetermined gas.

The device may further comprise a control unit, said control unit being coupled to said sensor to receive a signal indicating the presence of said at least one predetermined gas and coupled to said shutter mechanism to control said shutter mechanism to close said air inlet if a concentration of said gas exceeds a predetermined threshold.

According to an embodiment, said control unit may be configured to query a user of the device if the air inlet is to be closed by said shutter mechanism in case said at least one predetermined gas is detected, and wherein said control unit is further configured to control said shutter mechanism to close said air inlet only when said user confirms that the air inlet is to be closed.

According to an embodiment, said power supply may be selected from the group consisting of a fuel cell and a metal-air cell.

According to an embodiment, said shutter mechanism may comprise a lid movable between an open position and a closed position, said lid in said closed position covering said air inlet.

Said shutter mechanism may further comprise a sealing surrounding said air inlet.

The device may further comprise an auxiliary power supply, said auxiliary power supply being configured to supply said device with power when said shutter mechanism closes said air inlet.

According to an embodiment, the device may be selected from the group consisting of a mobile phone, a smartphone, a portable gaming device, a personal digital assistant and a laptop computer.

According to an embodiment, said at least one predetermined gas may comprise a gas selected from the group consisting of carbon monoxide, sulfur dioxide, hydrogen sulphide and an organic gas.

According to another embodiment, a method for operating a mobile electronic device is provided,
comprising:
detecting at least one predetermined gas in air surrounding said mobile device by a sensor, and
closing an air inlet of a power supply unit of said mobile electronic device by a shutter mechanism if said at least one predetermined gas is detected.

According to an embodiment, the method may further comprise switching from said power supply to an auxiliary power supply to supply said mobile electronic device with power if said at least one predetermined gas is detected.

According to an embodiment, the method may further comprise: querring a user of the mobile electronic device whether said air inlet is to be closed in case of detecting said at least one predetermined gas, and
performing said closing step only if said user confirms that the air inlet is to be closed.

It should be noted that the above described features can be freely combined with each other unless specifically noted to the contrary.

### BRIEF DESCRIPTION OF THE SEVERAL VIEWS OF THE DRAWINGS

Figure 1 shows a block diagram of a mobile electronic device according to an embodiment of the present invention.
Figures 2A and 2B show perspective views of a mobile electronic device according to another embodiment of the present invention.
Figures 3A and 3B show perspective views of a mobile electronic device according to a further embodiment of the present invention.
Figures 4A and 4B show perspective views of a mobile electronic device according to a further embodiment of the present invention.

### DETAILED DESCRIPTION OF THE INVENTION

In the following, embodiments of the present invention will be described in detail with reference to the attached drawings. It has to be noted that the embodiments described hereinafter are merely intended to illustrate the present invention and are not to be construed as limiting the scope thereof. It is to be understood that in the following description of embodiments, any direct connection or coupling between functional blocks, devices, components, circuit elements or other physical or functional units shown in the drawings or described herein, i. e. any connection without intervening elements, could also be implemented by an indirect connection or coupling, i. e. a connection or coupling with one or more additional intervening elements. Furthermore, it should be appreciated that the partitioning of embodiments into functional blocks or units shown in the drawings is not to be construed as indicating that these units necessarily are implemented physically separate, and they may also be implemented together in integrated units or devices. It is to be understood that features of various embodiments described hereinafter may be combined with each other unless specifically noted otherwise.

Furthermore, it is to be understood that describing an embodiment comprising a plurality of elements is not to be construed as indicating that all these elements are necessary for practicing the present invention, or that the present invention is limited to these elements. Instead, in other embodiments, only some of such elements and/or alternative elements may be present.

It is to be noted that any directional terminology like "top", "bottom", "left" or "right" used in the following detailed description is merely used for easy reference to certain portions of the drawings and is not to be construed as limiting the actual positioning or orientation of elements of embodiments in implementations of the present invention.

In the Figures, like reference numerals indicate similar or equivalent, but not necessarily identical elements.

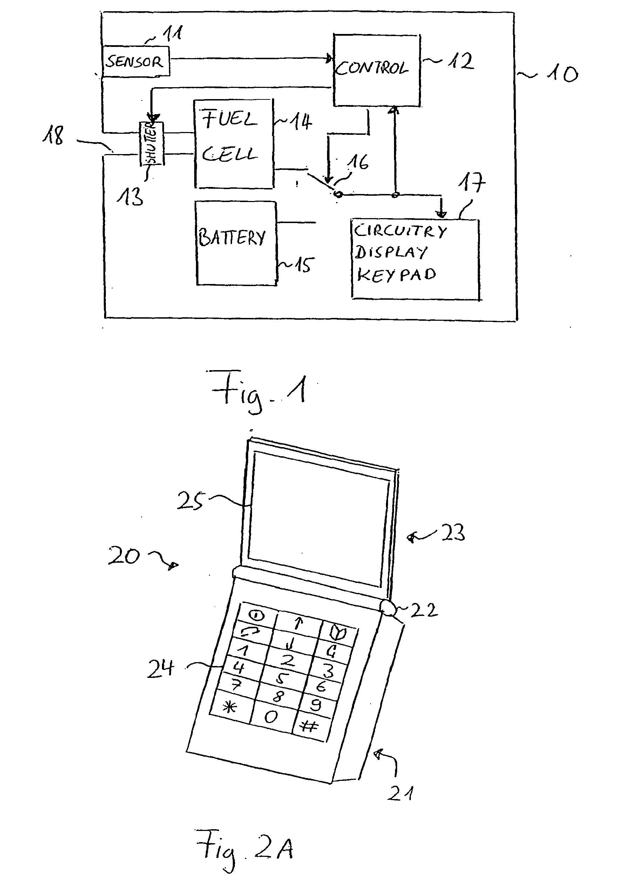

In Figure 1, a mobile electronic device 10 according to an embodiment of the present invention is shown. Mobile electronic device 10 may for example be a mobile phone, a laptop computer, a personal digital assistant (PDA), a smartphone or a mobile gaming device, but is not limited to these kinds of devices.

Mobile electronic device 10 comprises elements 17 like communication circuitry, a display or a keypad which need to be supplied with electric power to ensure the functioning of mobile electronic device 10. The type and number of elements 17 may vary depending on the type of mobile electronic device considered.

To supply elements 17 with electrical power, a fuel cell 14 is provided. A fuel cell generally is an element which generates electricity from an electrochemical reaction in which oxygen which in the embodiment of Figure 1 is drawn from ambient air via an air inlet 18 and a fuel, for example hydrogen or methanol, combine to form i. a. water. Instead of such a fuel cell, a fuel cell-like element which uses a different electrochemical reaction involving oxygen from ambient air to generate electricity, like a zinc-air cell, may be used. Known types of fuel cells usable in embodiments of the present invention include hydrogen fuel cells and so called direct methanol fuel cells.

As an auxiliary power supply in case of failure of fuel cell 14, a battery 15 may be additionally provided. Battery 15 may be a rechargeable or non-rechargeable battery. Fuel cell 14 and battery 15 may selectively be coupled with elements 17 via a switch 16 controlled by a control unit 12. Also, in the embodiment shown in Figure 1 control unit 12 itself is supplied by fuel cell 14 or battery 15. In other embodiments, control unit 12 may have a separate power supply like a separate battery.

Furthermore, mobile electronic device 10 comprises a sensor 11 configured to detect contaminants in the ambient air, for example carbon monoxide, sulfur dioxide or hydrogen sulphide. Sensor 11 may for example be a semiconductor-based sensor. Such semiconductor sensors may for example comprise an array of chemiresistors made of individual pristine SnO₂, sulfur-doped (Ni)-SnO₂, nanowires and TiO₂ and In₂O₃ mesoscopic whiskers on a silicon/silicon dioxide wafer. Other sensors include biomimetic sensors or electrochemical sensors. Since suitable sensors per se are known in the art, they will not be described in greater detail here.

When sensor 11 detects one or more contaminants in ambient air exceeding a predetermined threshold (for example, the threshold may be the detection limit of the sensor, but also may be chosen to be above the detection limit), in the embodiment of Figure 1 it sends a corresponding signal to control unit 12. In the response to the signal, control unit 12 switches switch 16 from fuel cell 14 to battery 15 such that the system is now supplied by battery 15. Immediately after controlling switch 16, control unit 12 controls a shutter unit 13 to close air inlet 18 to provide contamination of fuel cell 14 by the contaminants detected in the ambient air.

In an embodiment, as soon as sensor 11 does not signal control unit 12 that contaminants are present, control unit 12 changes switch 16 to fuel cell 14 and controls shutter unit 13 to open air inlet 18 such that power supply by fuel cell 14 can be resumed. In other words, in such an embodiment battery 15 acts as an auxiliary power supply in case fuel cell 14 cannot be used due to contaminants in the air which would reduce or the efficiency of fuel cell 14, degrade its function or even destroy it.

It should be noted that the embodiment of Figure 1 serves merely as an example, and a plurality of variations and modifications are possible without departing from the scope of the present invention. For example, more than one sensor may be provided. The signaling from sensor 11 to control unit 12 may be different from the one described, for example sensor 11 may send a signal to control unit 12 as long as no contaminants are present, sensor 11 may send different signals for different contaminants, and/or sensor 11 may send signal indicating the concentration of contaminants which are then compared with a predetermined threshold in control unit 12. Also, more than one sensor 11 may be present, for example different sensors for sensing different contaminants.

In an embodiment, battery 15 may be omitted, and the system may simply shut down in case contaminants are detected and shutter unit 13 closes air inlet 18. In yet another embodiment, in case contaminants are detected a user of mobile electronic device 10 may be queried for example via a display and keypad of elements 17 if the air inlet 18 should be closed.

Moreover, while only a single air inlet 18 is shown in Figure 1, mobile electronic device 10 may comprise a plurality of air inlets which may be closed either with separate shutters or with common shutters closing more than one air inlet at a time.

In still another embodiment, instead of providing an air inlet like air inlet 18 extending into the mobile electronic device, an air inlet-like air electrode of the fuel cell may be directly placed at the surface of the mobile electronic device, and a shutter may be provided to cover this air inlet of the fuel cell controlled by a respective control unit.

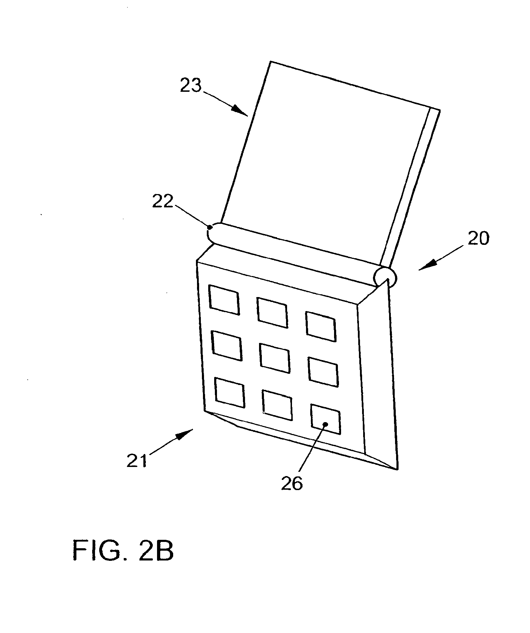

As already mentioned, mobile electronic device 10 may be a mobile phone. An example for such a mobile phone is shown in Figure 2, Figure 2A showing a perspective view of a front side of a mobile phone 20 and Figure 2B showing a perspective view of the back side thereof.

Mobile phone 20 in the example shown comprises a first part 21 and a second part 23 connected by a hinge 22 such that second part 23 may be folded onto first part 21 thus covering a keypad 24 on part 21. Part 23 comprises a display 25. Mobile phone 20 comprises an internal fuel cell as a power supply. At a back side of mobile phone 20, air inlets 26 are provided to supply the fuel cell with air. Air inlets 26 as explained with reference to Figure 1 may be closed by a shutter when contaminants are detected in the ambient air by one or more corresponding sensors.

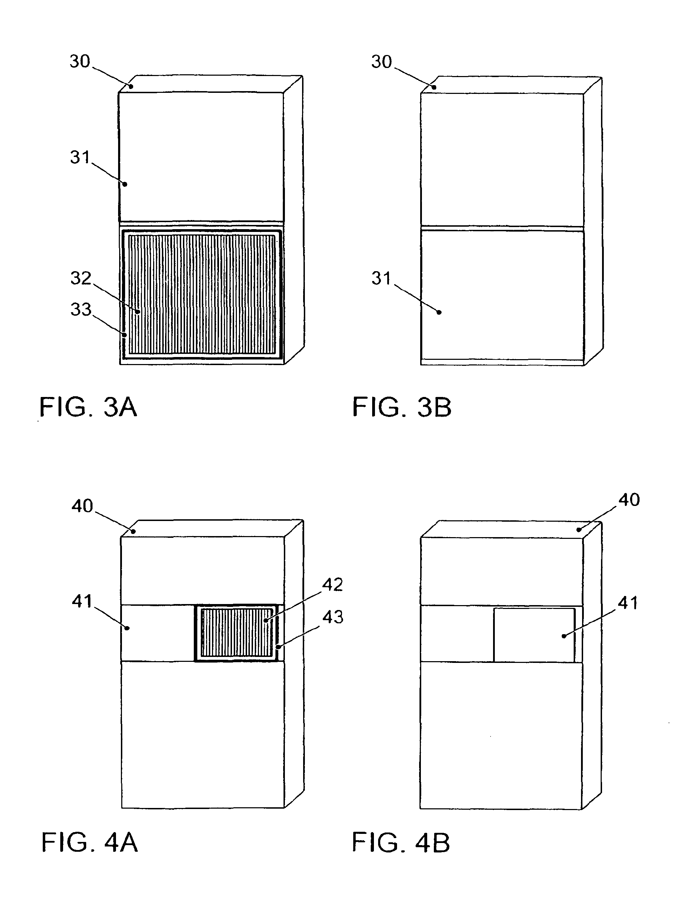

In Figures 3A and 3B, a perspective view of a further mobile electronic device 30 according to an embodiment of the present invention is shown. Mobile electronic device 30 may for example be a mobile phone, but also may be another kind of mobile electronic device.

Mobile electronic device 30 comprises a fuel cell or similar device like a metal-air cell of which air access holes i. e. air inlets 32, also referred to as an air electrode are visible at the outside of electronic device 30. Air inlets 32 are surrounded by a sealing 33, for example a rubber sealing.

A lid 31 is provided movable from an open position shown in Figure 3A to a closed position shown in Figure 3B. In the closed position, through sealing 33 lid 31 closes air inlets 32 in an essentially air-tight manner. Lid 31 is an example for a shutter mechanism and may be controlled as explained with reference to Figure 1.

Shutters implemented using a lid as lid 31 of Figure 3 are not restricted to the form shown. For example, instead of a single lid, also two lids moving from two different sides onto an area of one or more air inlets may be used. A mobile electronic device 40 with a different lid arrangement is shown in Figures 4A and 4B. Similar to mobile electronic device 30, also mobile electronic device 40 comprises air inlets 42 forming an air electrode of a fuel cell or similar power supply surrounded by a sealing 43 like a rubber sealing. A lid 41 is provided which in Figure 4A is shown in an opened state allowing air to enter air inlets 42 and in a closed state sealing air inlets 42 in Figure 4B. Apart from the different size and arrangement of the air inlets and the lid, mobile device 40 is similar to mobile device 30.

It should be noted that shutter units usable in embodiments of the present invention are not limited to lids as shown in Figures 3 and 4, but also other types of shutters like electric valves may be used.

As can be seen from the above explanations, the present invention is not limited to specific embodiments, but is intended to be limited only by the appended claims and equivalents thereof.

## Claims

1. A mobile electronic device (10; 30; 40), comprising:
a power supply (14) configured to generate power using oxygen,and
an air inlet (18; 26; 32; 42) to supply ambient air to said power supply (14),
**characterized in that**
the mobile electronic device (10; 30; 40) further comprises a sensor (11) configured to detect at least one predetermined gas in the ambient air, and
a shutter mechanism (13) configured to close said air inlet (18; 26) if said sensor (11) detects said predetermined gas.

2. The device (10; 30; 40) of claim 1,
further comprising a control unit (12), said control unit (12) being coupled to said sensor (11) to receive a signal indicating the presence of said at least one predetermined gas and coupled to said shutter mechanism (13) to control said shutter mechanism (13) to close said air inlet (18; 26; 32; 42) if a concentration of said gas exceeds a predetermined threshold.

3. The device (10; 30; 40) of claim 2, wherein said control unit (12) is configured to query a user of the device (10; 30; 40) if the air inlet (18; 26; 32; 42) is to be closed by said shutter mechanism (13) in case said at least one predetermined gas is detected, and wherein said control unit (12) is further configured to control said shutter mechanism (13) to close said air inlet (18; 26; 32; 42) only when said user confirms that the air inlet (18; 26; 32; 42) is to be closed.

4. The device (10; 30; 40) of any one of claims 1-3, wherein said power supply is selected from the group consisting of a fuel cell (14) and a metal air cell.

5. The mobile electronic device (10; 30; 40) of any one of claims 1-4, wherein said shutter mechanism (13) comprises a lid (31; 41) movable between an open position and a closed position, said lid (31; 41) in said closed position covering said air inlet (18; 26; 32; 42).

6. The device (10; 30; 40) of claim 5, wherein said shutter mechanism (13) comprises a sealing surrounding said air inlet (18; 26; 32; 42).

7. The device (10; 30; 40) of any one of claims 1-6, further comprising an auxiliary power supply, said auxiliary power supply being configured to supply said device (10; 30; 40) with power when said shutter mechanism (13) closes said air inlet (18; 26; 32; 42).

8. The device (10; 30; 40) of any one of claims 1-7, wherein the device (10; 30; 40) is selected from the group consisting of a mobile phone (20), a smartphone, a portable gaming device (10; 30; 40), a personal digital assistant and a laptop computer.

9. The mobile device (10; 30; 40) of any one of claims 1-8, wherein said at least one predetermined gas comprises a gas selected from the group consisting of carbon monoxide, sulfur dioxide, hydrogen sulphide and an organic gas.

10. A method for operating a mobile electronic device (10; 30; 40),
comprising:
detecting at least one predetermined gas in an air surrounding said mobile device (10; 30)by a sensor (11) of the mobile electronic device (10; 30; 40), and
closing an air inlet (18; 26; 32; 42) of a power supply unit of said mobile electronic device (10; 30; 40) by a shutter mechanism (13) if said at least one predetermined gas is detected.

11. The method of claim 10,
further comprising switching from said power supply to an auxiliary power supply to supply said mobile electronic device (10; 30; 40) with power if said at least one predetermined gas is detected.

12. The method of claim 10 or 11, further comprising:
querying a user of the mobile electronic device (10; 30; 40) whether said air inlet (18; 26; 32; 42) is to be closed in case of detecting said at least one predetermined gas, and
performing said closing step only if said user confirms that the air inlet (18; 26; 32; 42) is to be closed.

## Patentansprüche

1. Mobiles Elektronikgerät (10; 30; 40) umfassend:
eine Stromversorgung (14), die eingerichtet ist, Strom durch Verwendung von Sauerstoff zu generieren, und
einen Lufteinlass (18; 26; 32; 42), um die Stromversorgung (14) mit Umgebungsluft zu versorgen,
**dadurch gekennzeichnet, dass**
das mobile Elektronikgerät (10; 30; 40) weiterhin einen Sensor (11), der eingerichtet ist, mindestens ein vorbestimmtes Gas in der Umgebungsluft zu detektieren, und einen Schließmechanismus (13), der eingerichtet ist, den Lufteinlass (18; 26) zu schließen, wenn der Sensor (11) das vorbestimmte Gas detektiert, umfasst.

2. Gerät (10; 30; 40) nach Anspruch 1,
weiterhin umfassend eine Steuereinheit (12), wobei die Steuereinheit (12) mit dem Sensor (11) gekoppelt ist, um ein Signal zu empfangen, das die Anwesenheit des mindestens einen vorbestimmten Gases anzeigt und mit dem Schließmechanismus (13) gekoppelt ist, um den Schließmechanismus (13) zu steuern, um den Lufteinlass (18; 26; 32; 42) zu schließen, wenn eine Konzentration des Gases einen vorbestimmten Schwellenwert überschreitet.

3. Gerät (10; 30; 40) nach Anspruch 2, wobei die Steuereinheit (12) eingerichtet ist, einen Benutzer des Gerätes (10; 30; 40) abzufragen, wenn der Lufteinlass (18; 26; 32; 42) durch den Schließmechanismus (13) zu schließen ist, wenn mindestens ein vorbestimmtes Gas detektiert wird, und wobei die Steuereinheit (12) weiterhin eingerichtet ist, den Schließmechanismus (13) zu steuern, um den Lufteinlass (18; 26; 32; 42) nur dann zu schließen, wenn der Benutzer bestätigt, dass der Lufteinlass (18; 26; 32; 42) geschlossen werden soll.

4. Gerät (10; 30; 40) nach einem der Ansprüche 1-3, wobei die Stromversorgung aus einer Gruppe, die aus einer Brennstoffzelle (14) und einer Metall-Luft-Zelle besteht, ausgewählt ist.

5. Mobiles Elektronikgerät (10; 30; 40) nach einem der Ansprüche 1-4, wobei der Schließmechanismus (13) einen Deckel (31; 41) umfasst, der zwischen einer offenen Position und einer geschlossenen Position bewegbar ist, wobei der Deckel (31; 41) in der geschlossenen Position den Lufteinlass (18; 26; 32; 42) bedeckt.

6. Gerät (10; 30; 40) nach Anspruch 5, wobei der Schließmechanismus (13) eine Dichtung umfasst, die den Lufteinlass (18; 26; 32; 42) umgibt.

7. Gerät (10; 30; 40) nach einem der Ansprüche 1-6, weiterhin umfassend eine Hilfsstromversorgung, wobei die Hilfsstromversorgung eingerichtet ist, das Gerät (10; 30; 40) mit Strom zu versorgen, wenn der Schließmechanismus (13) den Lufteinlass (18; 26; 32; 42) schließt.

8. Gerät (10; 30; 40) nach einem der Ansprüche 1-7, wobei das Gerät aus einer Gruppe, die aus einem mobilen Telefon (20), einem Smartphone, einer tragbaren Spielekonsole (10; 30; 40), einem persönlichen digitalen Assistenten und einem Laptop-Computer besteht, ausgewählt ist.

9. Mobiles Gerät (10; 30; 40) nach einem der Ansprüche 1-8, wobei das mindestens eine vorbestimmte Gas ein Gas umfasst, das aus einer Gruppe, die aus Kohlenmonoxid, Schwefeldioxid, Schwefelwasserstoff und organischem Gas besteht, ausgewählt ist.

10. Verfahren zum Betrieb eines mobilen Elektronikgeräts (10; 30; 40),
umfassend:
Detektieren von mindestens einem vorbestimmten Gas in einer Luft, die das Mobilgerät (10; 30) umgibt, durch eine Sensor (11) des mobilen Elektronikgeräts (10; 30; 40), und Schließen eines Lufteinlasses (18; 26; 32; 42) einer Stromversorgungseinheit des mobilen Elektronikgeräts (10; 30; 40) durch einen Schließmechanismus (13), wenn das mindestens eine vorbestimmte Gas detektiert wird.

11. Verfahren nach Anspruch 10,
weiterhin umfassend Umschalten von der Stromversorgung zu einer Hilfsstromversorgung, um das mobile Elektronikgerät (10; 30; 40) mit Strom zu versorgen, wenn das mindestens eine vorbestimmte Gas detektiert wird.

12. Verfahren nach Anspruch 10 oder 11, weiterhin umfassend:
Abfragen eines Benutzers des mobilen Elektronikgeräts (10; 30; 40), ob der Lufteinlass (18; 26; 32) geschlossen werden soll, wenn das mindestens eine vorbestimmte Gas detektiert wird, und Ausführen des Schließschritts nur dann, wenn der Benutzer bestätigt, dass der Lufteinlass (18; 26; 32; 42) geschlossen werden soll.

## Revendications

1. Dispositif électronique mobile (10 ; 30 ; 40) comprenant :
une alimentation électrique (14) configurée pour produire du courant électrique à l'aide d'oxygène ; et
une entrée d'air (18 ; 26 ; 32 ; 42) destinée à fournir de l'air ambiant à ladite alimentation électrique (14) ;
**caractérisé en ce que** :
le dispositif électronique mobile (10 ; 30 ; 40) comprend en outre un capteur (11) configuré pour détecter au moins un gaz prédéterminé dans l'air ambiant et
un mécanisme obturateur (13) configuré pour fermer ladite entrée d'air (18 ; 26) si ledit capteur (11) détecte ledit gaz prédéterminé.

2. Dispositif électronique mobile (10 ; 30 ; 40) selon la revendication 1, comprenant en outre une unité de commande (12), ladite unité de commande (12) étant couplée audit capteur (11) afin de recevoir un signal indiquant la présence dudit au moins un gaz prédéterminé et couplée audit mécanisme obturateur (13) afin de commander ledit mécanisme obturateur (13) pour qu'il ferme ladite entrée d'air (18 ; 26 ; 32 ; 42) si une concentration dudit gaz dépasse un seuil prédéterminé.

3. Dispositif électronique mobile (10 ; 30 ; 40) selon la revendication 2, dans lequel ladite unité de commande (12) est configurée pour demander à un utilisateur dudit dispositif électronique mobile (10 ; 30 ; 40) si l'entrée d'air (18 ; 26 ; 32 ; 42) doit être fermée par ledit mécanisme obturateur (13) lorsque ledit au moins un gaz prédéterminé est détecté et dans lequel ladite unité de commande (12) est en outre configurée pour commander ledit mécanisme obturateur (13) afin qu'il ferme ladite entrée d'air (18 ; 26 ; 32 ; 42) seulement si ledit utilisateur confirme que l'entrée d'air (18 ; 26 ; 32 ; 42) doit être fermée.

4. Dispositif électronique mobile (10 ; 30 ; 40) selon l'une quelconque des revendications 1 à 3, dans lequel ladite alimentation électrique est sélectionnée dans le groupe composé d'une pile à combustible (14) et d'une pile métal-air.

5. Dispositif électronique mobile (10 ; 30 ; 40) selon l'une quelconque des revendications 1 à 4, dans lequel ledit mécanisme obturateur (13) comprend un couvercle (31 ; 41) pouvant se déplacer entre une position ouverte et une position fermée, ledit couvercle (31 ; 41) recouvrant ladite entrée d'air (18 ; 26 ; 32 ; 42) lorsqu'il est en position fermée.

6. Dispositif électronique mobile (10 ; 30 ; 40) selon la revendication 5, dans lequel ledit mécanisme obturateur (13) comprend un joint entourant ladite entrée d'air (18 ; 26 ; 32 ; 42).

7. Dispositif électronique mobile (10 ; 30 ; 40) selon l'une quelconque des revendications 1 à 6, comprenant en outre une alimentation électrique auxiliaire, ladite alimentation électrique auxiliaire étant configurée pour alimenter ledit dispositif électronique mobile (10 ; 30 ; 40) en électricité lorsque ledit mécanisme obturateur (13) ferme ladite entrée d'air (18 ; 26 ; 32 ; 42).

8. Dispositif électronique mobile (10 ; 30 ; 40) selon l'une quelconque des revendications 1 à 7, dans lequel le dispositif électronique mobile (10 ; 30 ; 40) est sélectionné dans le groupe consistant en un téléphone mobile (20), un téléphone intelligent, un dispositif portatif de jeu (10 ; 30 ; 40), un assistant numérique personnel et un ordinateur portable.

9. Dispositif électronique mobile (10 ; 30 ; 40) selon l'une quelconque des revendications 1 à 8, dans lequel ledit au moins un gaz prédéterminé consiste en un gaz sélectionné dans le groupe consistant en monoxyde de carbone, dioxyde de soufre, sulfure d'hydrogène et un gaz organique.

10. Procédé de fonctionnement d'un dispositif électronique mobile (10 ; 30 ; 40), comprenant les étapes consistant à :
détecter au moins un gaz prédéterminé dans l'air entourant ledit dispositif électronique mobile (10 ; 30) à l'aide d'un capteur (11) du dispositif électronique mobile (10 ; 30 ; 40) ; et
fermer une entrée d'air (18 ; 26 ; 32 ; 42) d'une unité d'alimentation électrique dudit dispositif électronique mobile (10 ; 30 ; 40) à l'aide d'un mécanisme obturateur (13) si ledit au moins un gaz prédéterminé est détecté.

11. Procédé selon la revendication 10, comprenant en outre l'étape consistant à commuter entre ladite alimentation électrique et une alimentation électrique auxiliaire afin d'alimenter ledit dispositif électronique mobile (10 ; 30 ; 40) en électricité si ledit au moins un gaz prédéterminé est détecté.

12. Procédé selon la revendication 10 ou 11, comprenant en outre les étapes consistant à :
demander à un utilisateur du dispositif électronique mobile (10 ; 30 ; 40) si ladite entrée d'air (18 ; 26 ; 32 ; 42) doit être fermée lorsque ledit au moins un gaz prédéterminé a été détecté ; et
n'effectuer ladite étape de fermeture que si ledit utilisateur confirme que ladite entrée d'air (18 ; 26 ; 32 ; 42) doit être fermée.
